# EUROPÄISCHE PATENTSCHRIFT

(11) **EP 3 153 477 B1**
(45) Veröffentlichungstag und Bekanntmachung des Hinweises auf die Patenterteilung: **18.10.2017**
(21) Anmeldenummer: 16001989.9
(22) Anmeldetag: 13.09.2016
(51) Int. Cl.: C03B 9/353

(54) **SCHLIESSMECHANISMUS FUER EINE GLASFORMMASCHINE**
LOCKING MECHANISM FOR A GLASSWARE FORMING MACHINE
MECANISME DE FERMETURE D'UNE MACHINE DE MOULAGE DE VERRE

(30) Priorität: 07.10.2015 DE 202015006975 U
(43) Veröffentlichungstag der Anmeldung: 12.04.2017
(73) Patentinhaber: Heye International GmbH, 31683 Obernkirchen (DE)
(72) Erfinder: Hardekopf, Daniel, 31714 Lauenhagen (DE); Felgenhauer, Benedikt, 32049 Herford (DE)
(74) Vertreter: Sobisch, Peter

(56) Entgegenhaltungen:
- EP-A1- 2 226 297
- DE-T2- 69 509 946
- JP-A- 2001 019 443
- US-A1- 2010 018 256

## Beschreibung

Die Erfindung bezieht sich auf einen Schließmechanismus entsprechend dem Oberbegriff des Anspruchs 1.

Diese Schließmechanismen für Glasformmaschinen sind in vielfältiger Form bekannt. So ist in der DE 33 46 466 A1 eine Vorrichtung zum Öffnen und Schließen der Vorformen einer Glasformmaschine offenbart, bei der die Öffnungs- und Schließbewegung durch eine Parallelbewegung der beiden Formhälften mittels eines Antriebs dargestellt ist, der die vertikal gerichtete Linearbewegung einer Kolben-Zylinder-Einheit über zwischengeordnete Hebel auf zwei sich parallel und mit Abstand zueinander erstreckende Kurbelwellen überträgt, deren Drehbewegungen über mit diesen in Verbindung stehende Kurbeln in gleichförmige gegenläufige Bewegungen der Formhälften umgesetzt werden. Die Kolben-Zylinder-Einheit sowie die übrigen Elemente des Antriebs befinden sich seitlich auf einer gleichen Höhe mit den Formhälften.

Eine weitere hiermit vergleichbare Vorrichtung ist aus der DE 695 09 946 T2 bekannt, bei der Antriebselemente für einen Parallelschließmechanismus einer Glasformmaschine seitlich auf gleicher Höhe mit den Formhälften positioniert sind. Der Antrieb ist im Übrigen durch eine Kolben-Zylinder-Einheit gekennzeichnet.

Nachteilig an diesen bekannten Ausführungsformen ist, dass durch die seitlichen Antriebselemente auf dem Stationskasten Einbauraum beansprucht wird, der an dieser Stelle somit für andere Funktionselemente nicht zur Verfügung steht. Die Darstellung einer zuverlässigen Schmierung macht einen Zentralschmieranschluss nebst einem, diesen einbindenden Leitungssystem erforderlich, wobei überschüssiges Schmieröl in einem Sammeltank aufgefangen werden muss. Die Benutzung der bei Gelenkgetrieben, z. B. Kniehebelgetrieben zur Verschleißminderung dienenden, auswechselbaren, gefetteten, mit Teflon beschichteten Blechbuchsen ist nicht sinnvoll, da durch Drehung unter Last die Teflonbeschichtung zerstört wird und ein Spiel entsteht, welches einem positionsgenauen, insbesondere reproduzierbaren Verfahren der Formhälften bei einer Schließbewegung abträglich ist. Auch ist ein Nachschmieren bei laufendem Betrieb der Glasformmaschine nicht möglich. Schließlich können bei den aus diesem Stand der Technik bekannten Antriebssträngen die Vorteile eines Servomotors mit Hinblick auf die sich verschleißbedingt ständig ändernde Rotorposition nur sehr unvollkommen genutzt werden.

Aus der EP 0555 956 A1 ist ein Formenmechanismus für die zwischen einer Öffnungs- und einer Schließstellung parallel bewegbaren Formhälften einer Glasformmaschine bekannt, bei der die vertikale Bewegung der Kolbenstange einer Kolben-Zylinder-Einheit mittels eines durch zwei Verbindungslaschen dargestellten Koppelgetriebes in zwei horizontal entgegensetzt gerichtete, die Schließ- sowie die Öffnungsbewegung der Formhälften bildende Teilbewegungen umgesetzt wird. Dieser Mechanismus hat im Wesentlichen eine solche weitere Ausgestaltung erfahren, welche durch Ausrichten der Wirkrichtung der Kolbenstange die Schließstellung der Formen zur Mittenachse dieses Mechanismus einstellt. Dieser Mechanismus ist dadurch gekennzeichnet, dass in der Schließstellung der beiden Verbindungslaschen die über die Kolben-Zylinder-Einheit übertragene Kraft nur zu einem geringen Teil als Schließkraft zur Verfügung steht.

Der aus der WO 2010/102590 A2 bekannte Parallelschließmechanismus für die Formhälften einer Glasformmaschine ist dadurch gekennzeichnet, dass jeder Formhälfte ein eigener Antrieb zugeordnet ist. Zu diesem Zweck sind zwei Antriebsstränge vorgesehen, deren jeder aus einem hängend angeordneten Motor und einem Planetengetriebe besteht, dessen Ausgangsbewegung mittels einer Scheibe, auf der ein Bolzen exzentrisch angeordnet ist, in eine hin- und hergehende, die Öffnungs- und Schließbewegung der die Formhälften tragenden Formträger umsetzbar ist. Aus dem Einsatz zweier getrennter Antriebsstränge ergibt sich ein vergleichsweise komplexer Aufbau.

Es ist die Aufgabe der Erfindung, einen Parallelschließmechanismus der eingangs genannten Art mit Hinblick auf einen konstruktiv einfachen Aufbau unter dem Gesichtspunkt von Verschleiß und Wartung zu verbessern. Gelöst ist diese Aufgabe bei einem solchen Parallelschließmechanismus durch die Merkmale des Kennzeichnungsteils des Anspruchs 1.

Erfindungswesentlich ist, dass sämtliche Komponenten des Antriebsstranges unterhalb einer Oberseite des Stationsgehäuses untergebracht sind, wobei die Formhalter auf einer Führung aufgelagert sind, die innerhalb eines seitlichen Gehäuseabschnitts oberhalb der Oberseite des Stationsgehäuses angeordnet sind. Über die Unterseite dieses Gehäuseabschnitts ist somit eine Verbindung zu dem Antriebsstrang eingerichtet. Die durch eine Platte bzw. einen Deckel dargestellte Oberseite des Stationsgehäuses eröffnet im Bedarfsfall die Möglichkeit, den kompletten Antriebsstrang über die genannte Oberseite aus dem Stationsgehäuse auszubauen bzw. in dieses einzubauen. Dies bringt eine beträchtliche Vereinfachung von Reparatur- bzw. Instandsetzungsarbeiten mit sich, da bisher bei den bekannten Ausführungsformen von Schließmechanismen bei Schäden am Getriebe das komplette Stationsgehäuse ausgetauscht werden musste, welches mit einem beträchtlich erhöhten Arbeitsaufwand einhergeht.

Der Antriebsstrang ist hängend unter dem genannten Gehäuseabschnitt angeordnet. Diese Maßnahme verdeutlicht, dass der erfindungsgemäße Schließmechanismus im Bedarfsfall vollständig nach oben aus dem Stationsgehäuse entfernt und umgekehrt eingesetzt werden kann.

Die Führung ist entsprechend den Merkmalen des Anspruchs 2 eine Linearführung und es ist diese innerhalb des genannten seitlichen Gehäuseabschnitts untergebracht. Es handelt sich somit vorzugsweise um einen Parallelschließmechanismus. Das System der Führung kann durch auf Rundstählen geführte Gleitbuchsen oder auch durch Präzisionsschienen dargestellt werden, auf denen wälzkörpergelagerte Führungselemente aufgelagert sind.

Der erfindungsgemäß eingesetzte Antrieb ist entsprechend den Merkmalen des Anspruchs 3 ein solcher, der ausgangsseitig eine vertikal gerichtete Linearbewegung generiert. Hierzu können grundsätzlich alle dem Fachmann für diesen Zweck geläufigen Antriebe eingesetzt werden.

Die Merkmale der Ansprüche 4 und 5 sind auf vorteilhafte und konstruktiv einfach darstellbare Antriebe gerichtet. In Betracht kommt hierbei beispielsweise ein Motor, dessen sich vertikal erstreckende Achse mit einer Gewindespindel in Antriebsverbindung steht, mittels welcher über eine Gewindemuffe eine vertikale Linearbewegung darstellbar ist. In Betracht kommt jedoch auch eine pneumatisch zu betätigende Kolben-Zylinder-Einheit, deren Achse sich vertikal erstreckt.

Die Lagerung der Formhalter erfolgt entsprechend den Merkmalen des Anspruchs 6 über Montageplatten, die über Führungselemente auf der Führung gelagert sind. Dies kann sowohl mittels Wälzkörpern als auch mittels Gleitbuchsen erfolgen.

Das Getriebe des Antriebsstranges ist entsprechend den Merkmalen des Anspruchs 7 dahingehend eingerichtet, dass die eingangsseitig vertikal orientierte Linearbewegung auf zwei horizontal gerichtete, zueinander gegenläufige, bezüglich einer vertikalen Mittelebene jedoch symmetrische Bewegungen verzweigt wird. Es sind dies die unmittelbar auf die genannten Montageplatten zu übertragenden Bewegungen.

Das Getriebe ist entsprechend den Merkmalen des Anspruchs 8 ein Kniehebelgetriebe oder umfasst zumindest ein Kniehebelgetriebe.

Die Merkmale des Anspruchs 9 sind auf Aspekte der Schmierung gerichtet. Hiernach ist ein Ölbad vorgesehen, welches zumindest das Getriebe vollständig aufnimmt, so dass sich infolge der permanenten Kontaktierung mit Schmieröl eine deutliche Verschleißminderung erreichen lässt. Ein weiterer Vorteil des Ölbades ist darin zu sehen, dass im Bereich des Getriebes eingepresste verschleißbeständige Buchsen eingesetzt werden können. Das Ölbad ist derart eingerichtet, dass eine einfache Füllstandskontrolle gegeben ist, so dass im Bedarfsfall eine rechtzeitige Nachfüllung erfolgen kann. Das Ölbad kann zusätzlich zu dem genannten Getriebe auch Teile des Antriebs wie z. B. eine Gewindespindel, eine Kolbenstange usw. einbeziehen.

Das Getriebe ist entsprechend den Merkmalen des Anspruchs 10 mittels des das Ölbad aufnehmenden Aufnahmebehältnisses gelagert. Das Aufnahmebehältnis bildet eine in das Stationsgehäuse einfach einzusetzende bzw. zu entfernende Baugruppe. Auf diese Weise ist der Umstand verdeutlicht, dass der erfindungsgemäße Schließmechanismus im Bedarfsfall einfach und schnell austauschbar angeordnet ist.

Die Merkmale der Ansprüche 11 und 12 sind auf eine weitere Ausgestaltung des Schmiersystems gerichtet. Hierzu ist ein Zentralschmiersystem vorgesehen, über welches schmierungsbedürftige Teile außerhalb des Ölbades versorgt werden. Dies betrifft insbesondere die genannte Führung sowie die mit dieser zusammenwirkenden Führungselemente. Wesentlich ist, dass ausgehend von einem Schmierölverteiler jede Schmierstelle mit einer eigenen Schmiermittelleitung ausgerüstet ist. Dies eröffnet die Möglichkeit, die Funktion der Schmiermittelversorgung einer jeden Schmierstelle individuell zu kontrollieren. Die Schmierung wird vorzugsweise intervallweise unter Mitwirkung einer Maschinensteuerung ausgelöst.

Die Merkmale des Anspruchs 13 sind auf ein konstruktives Ausführungsbeispiel eines erfindungsgemäßen Kniehebelgetriebes gerichtet, welches vollständig innerhalb des Stationsgehäuses, unterhalb der genannten Oberseite und innerhalb des Ölbades untergebracht ist.

Die Merkmale des Anspruchs 14 sind auf die Lagerung des Getriebes, hier des Kniehebelgetriebes gerichtet, welches in dem das Ölbad aufnehmenden Aufnahmebehältnis gelagert ist.

Man erkennt, dass mit dem erfindungsgemäßen Schließmechanismus ein reparaturfreundliches, kinematisch übersichtliches, auch Belange der Schmierung einbeziehendes System zur Verfügung gestellt wird.
Die Erfindung wird im Folgenden unter Bezugnahme auf das in den Zeichnungen dargestellte Ausführungsbeispiel näher erläutert werden. Es zeigen:
Fig. 1 eine perspektivische linksseitige Ansicht eines Stationsgehäuses mit einem erfindungsgemäßen Schließmechanismus in der Schließstellung;
Fig. 2 eine perspektivische rechtsseitige Ansicht des Stationsgehäuses mit einem erfindungsgemäßen Schließmechanismus in der Öffnungsstellung;
Fig. 3 eine Schnittansicht des Antriebsstranges in einer Ebene III - III der Fig. 7;
Fig. 4 eine vergrößerte Teildarstellung einer Einzelheit IV der Fig. 3;
Fig. 5 eine Schnittansicht des Stationsgehäuses in einer Ebene V - V der Fig. 7;
Fig. 6 eine Außenansicht des Stationsgehäuses entsprechend Fig.5 ohne Darstellung dessen Vorderwand und in entgegengesetzter Blickrichtung;
Fig. 7 eine rechtsseitige Ansicht des Stationsgehäuses in teilweiser Schnittdarstellung;
Fig. 8 eine vergrößerte Teildarstellung einer Einzelheit VIII der Fig. 7;
Fig. 9 eine vergrößerte Teilansicht einer Einzelheit IX der Fig. 10;
Fig. 10 eine linksseitige Ansicht des Stationsgehäuses in teilweiser Schnittdarstellung;
Fig. 11 eine ebene Ansicht eines Querschnitts des erfindungsgemäßen Schließmechanismus;
Fig. 12 eine isometrische Ansicht des Schließmechanismus gemäß Fig. 11;
Fig. 13 eine isometrische mittige Teilansicht des erfindungsgemäßen Schließmechanismus;
Fig. 14 eine Darstellung der Schmierölversorgung in einem Längsschnitt des Stationsgehäuses;
Fig. 15 eine vergrößerte Teildarstellung einer Einzelheit XV der Fig. 14;
Fig. 16 eine vergrößerte Teildarstellung des Antriebstranges des erfindungsgemäßen Schließmechanismus;
Fig. 17 eine vergrößerte Teildarstellung der Schmierölversorgung in einem Querschnitt des Stationsgehäuses.

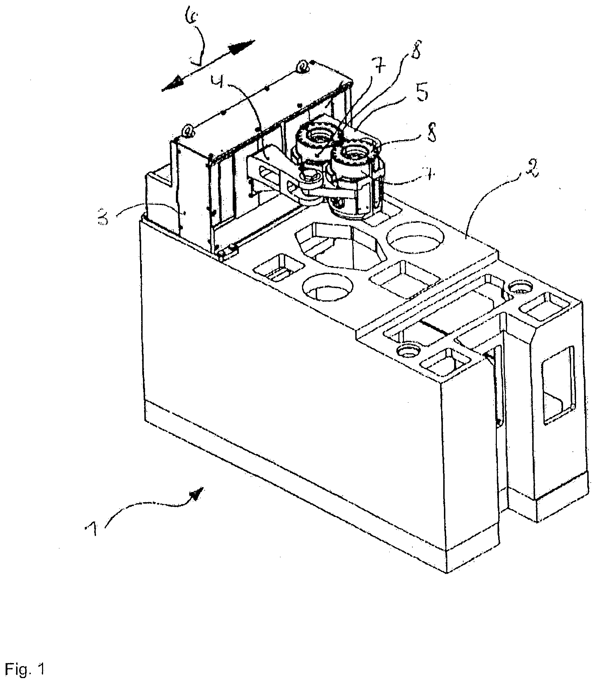

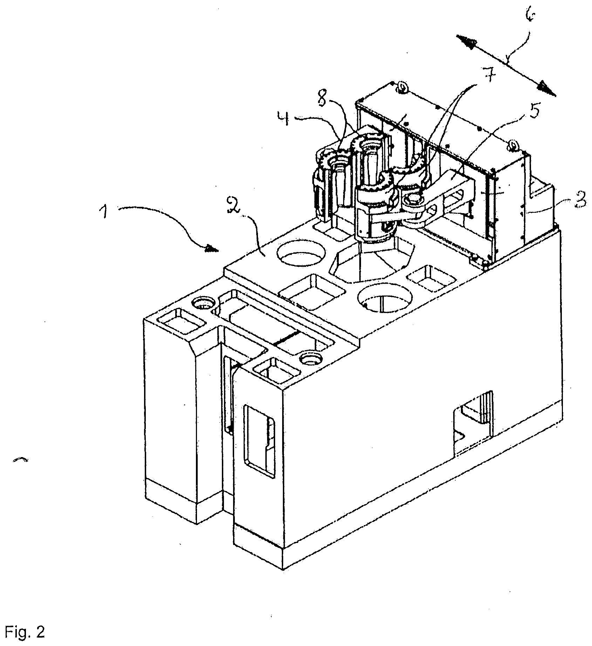

Mit 1 ist in Fig. 1 und Fig. 2 ein global quaderförmiges Stationsgehäuse bezeichnet, auf dessen Oberseite 2 sich ein, eine Traverse darstellender Gehäuseabschnitt 3 befindet, an dem zwei Formhalter 4, 5 in Richtung der Pfeile 6 linear zwischen einer in Fig. 1 gezeigten Schließstellung und einer in Fig. 2 gezeigten Öffnungsstellung horizontal verschiebbar angeordnet sind. Ein jeder der Formhalter 4, 5 trägt zwei Formhälften 7, 8, bei denen es sich um Vorformhälften einer Glasformmaschine, insbesondere einer I.S. Maschine handelt.

Der Gehäuseabschnitt 3 ist - wie im Folgenden noch beschrieben werden wird - zur Aufnahme der für eine Linearführung der Formhalter 4, 5 in Richtung der Pfeile 6 bestimmten Konstruktionselemente eingerichtet, wobei ein Motor nebst zugehörigen Getriebeelementen unter dem Gehäuseabschnitt 3 somit innerhalb des Stationsgehäuses 1 aufgenommen ist.

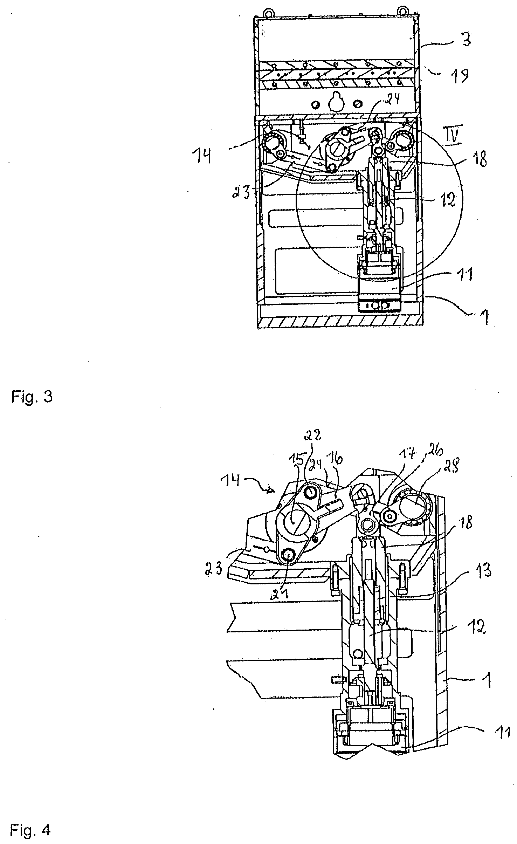

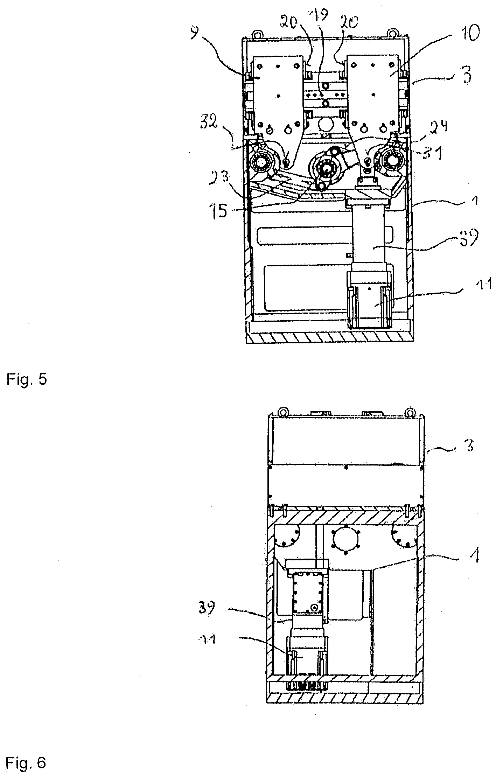

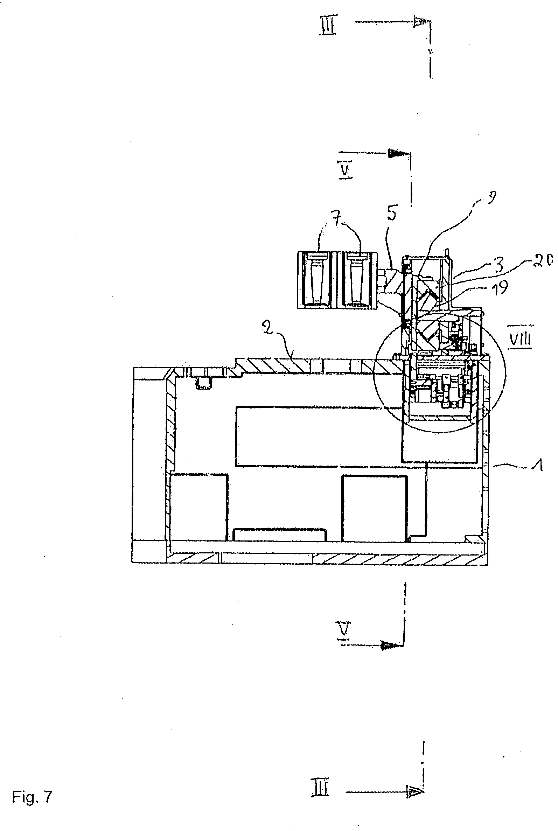

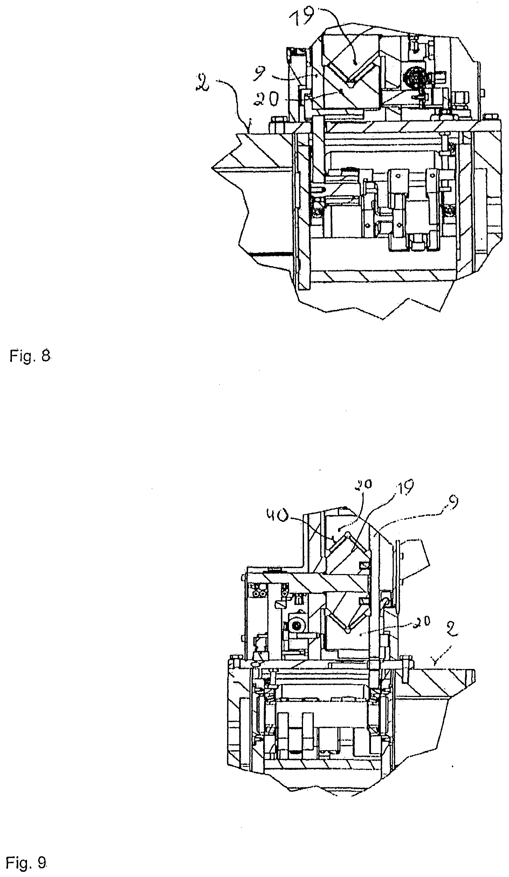

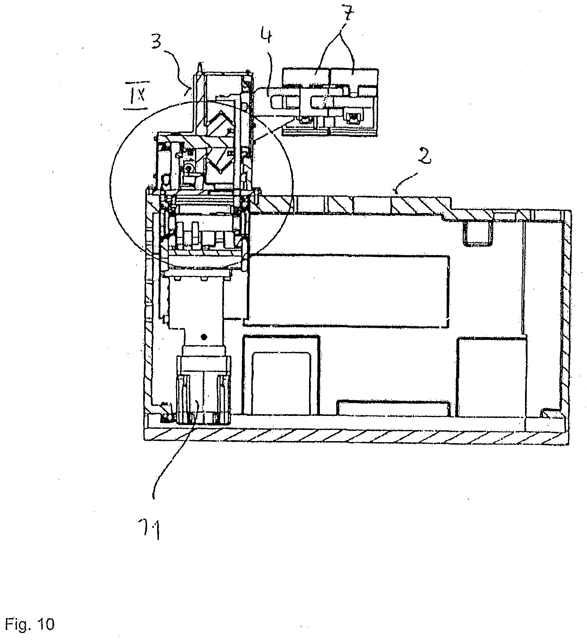

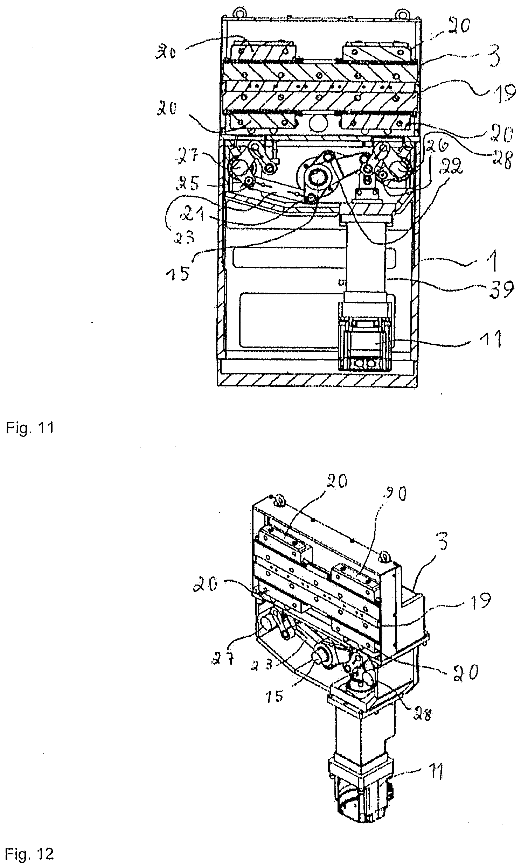

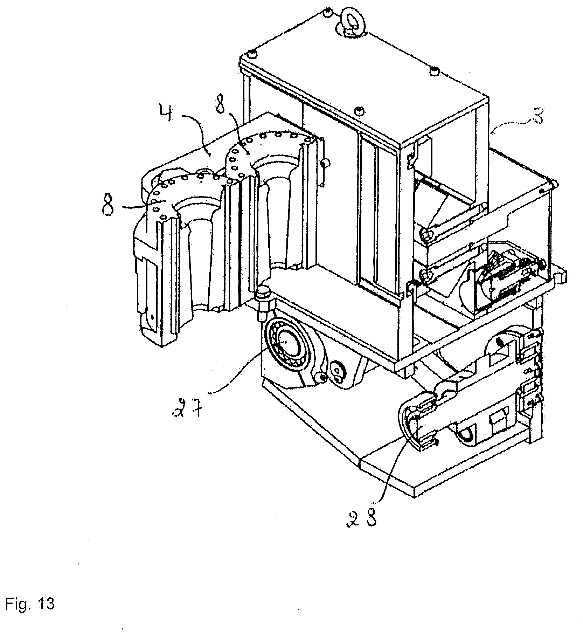

Es wird im Folgenden ergänzend auf die Figuren 3 bis 17 Bezug genommen, in denen Funktionselemente, die mit denjenigen der Figuren 1 und 2 übereinstimmen, entsprechend beziffert sind, so dass auf eine diesbezügliche wiederholte Beschreibung verzichtet werden kann.
Die Formhalter 4, 5 sind an Montageplatten 9, 10 befestigt, welche das Bindeglied zu den übrigen Elementen des Antriebsstranges des Schließmechanismus bilden. Der Antriebsstrang besteht aus einem Motor 11, dessen Achse sich vertikal innerhalb des Stationsgehäuses 1 erstreckt und mit einer gleichachsigen Gewindespindel 12 in Verbindung steht, die über eine Gewindemuffe 13 zur Einleitung einer vertikal gerichteten Linearbewegung in ein Kniehebelgetriebe 14 eingerichtet ist.

Die Montageplatten 9, 10 stehen mit einer horizontalen Linearführung 19 in Verbindung, welche durch ein Schienenprofil gebildet wird, entlang welcher die Öffnungs-und Schließbewegung der Formhälften 7, 8 eingerichtet ist. Das Schienenprofil der Linearführung 19 ist innerhalb des Gehäuseabschnitts 3 angeordnet und mit symmetrisch zu einer Vertikalmittelebene verlaufenden abgeschrägten Ober- und Unterseiten versehen, an denen über zylindrische Wälzkörper 40 gelagerte Führungselemente 20 anliegen, die an den Montageplatten 9, 10 befestigt sind.

Das Kniehebelgetriebe 14 umfasst eine zentrale Welle 15, die über einen Hebel 16 und einen Zwischenhebel 17 mit einer Stange 18 in Verbindung steht, die ihrerseits zur Übertragung einer vertikalen Bewegung und auf diese Weise zur Einleitung einer Drehbewegung in die Welle 15 eingerichtet ist.

Die Welle 15 ist mit zwei einander symmetrisch gegenüberliegenden Gelenklagern 21, 22 versehen, in denen Hebel 23, 24 angelenkt sind, die ihrerseits mit Gelenklagern 25, 26 in Verbindung stehen, die über Zwischenhebel 29, 30 mit Wellen 27, 28 drehfest verbunden sind. Es weist das Gesamtsystem bestehend aus den Wellen 15, 27 und 28, den Hebeln 23, 24 sowie den Zwischenhebeln 29, 30 einen bezüglich der zentralen Welle 15 symmetrischen Aufbau auf, so dass durch Drehung der Welle 15 bzw. eine Linearbewegung der Stange 18 symmetrisch gegenläufige Rotationsbewegungen der Wellen 27, 28 darstellbar sind.

Die Montageplatten 9, 10 sind jeweils über einen Bolzen 31, 32 an einem Zwischenhebel 33, 36 angelenkt, der seinerseits über einen Verbindungshebel 34, 35 mit der Welle 27, 28 drehfest verbunden ist, hierbei auf den einander zugekehrten Seiten der Wellen 27, 28 ein Kniegelenk bildend. Aufgrund der Symmetrieeigenschaften des Kniehebelgetriebes 14 bezüglich einer durch die Welle 15 verlaufenden vertikalen Mittelebene sind somit durch vertikale Bewegungen des Antriebs untereinander gleiche, jedoch gegenläufige Bewegungen der Montageplatten 9, 10 und damit der Formhälften 7, 8 dargestellt.

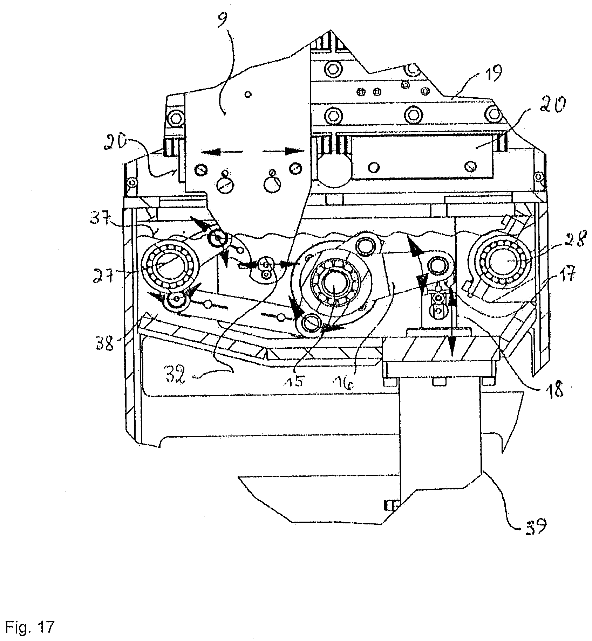

In Fig. 17 sind durch Pfeile die kinematisch miteinander verbundenen Bewegungen der einzelnen Übertragungselemente zwischen dem Antrieb und den Montageplatten 9, 10 verdeutlicht.

Wesentlich ist insoweit, dass sämtliche Elemente des Antriebs unterhalb der Oberseite 2 des Stationsgehäuses angeordnet sind, so dass diese Oberseite 2 als Modulplatte nutzbar ist.

Zur Schmiermittelversorgung ist, wie der Fig. 17 im Einzelnen entnehmbar ist, innerhalb des Stationsgehäuses, und zwar unmittelbar unterhalb des Gehäuseabschnitts 3 ein Ölbad 37 eingerichtet. Hierzu ist ein insbesondere das Kniehebelgetriebe 14 aufnehmendes Aufnahmebehältnis 38 eingerichtet, welches bis zu einem in etwa der Lage der Bolzen 31, 32 entsprechenden Füllstand mit Schmieröl gefüllt ist. Mit in das Ölbad 37 einbezogen ist ein Gehäuseabschnitt 39, innerhalb welchem die Gewindespindel 12 gelagert ist und innerhalb welchem die Gewindemuffe 13 geführt ist. Ebenfalls innerhalb des Ölbades 37 aufgenommen sind die unteren Enden der Montageplatten 9, 10 und damit die an dieser Stelle befindlichen Bolzen 31, 32.

Die Wellen 15, 27, 28 des Kniehebelgetriebes 14 sind in den Wandungen des Aufnahmebehältnisses 38 gelagert, so dass aufgrund der hängenden Anordnung des Antriebsstranges der Schließmechanismus als einheitliche Baugruppe über die Oberseite 2 des Stationsgehäuses 1 eingesetzt bzw. entfernt werden kann.

Man erkennt, dass das zwischen dem Antrieb, hier dem Motor 11 und den Montageplatten 9, 10 befindliche Getriebe, hier im Wesentlichen ein Kniehebelgetriebe 14 infolge deren Unterbringung in einem Ölbad einer besonders zuverlässigen Schmierwirkung ausgesetzt ist.

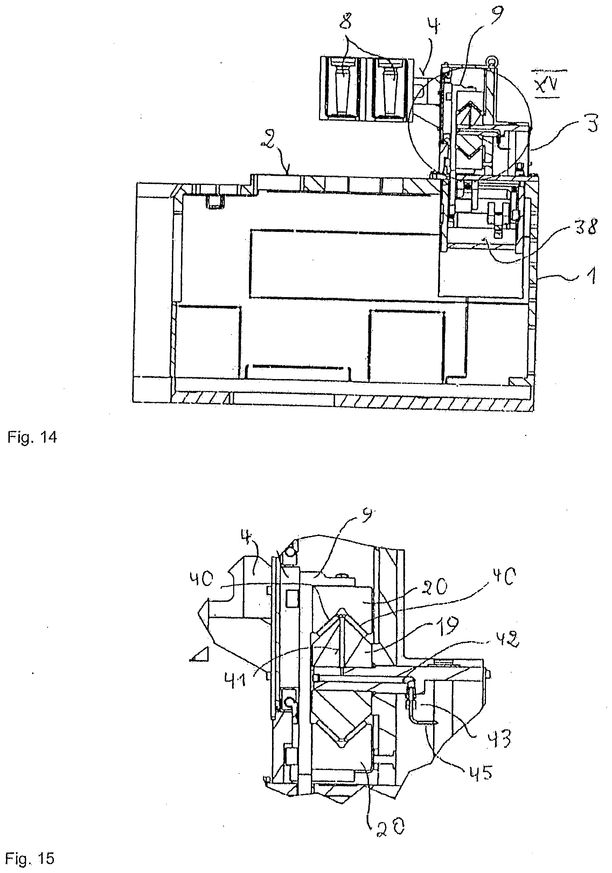

Für sonstige schmierungsbedürftige Bauelemente, hier insbesondere der Linearführung 19 und den mit diesen zusammenwirkenden Führungselementen 20 ist ein Zentralschmiersystem vorgesehen, welches unter Mitwirkung einer zeichnerisch nicht dargestellten Schmiermittelpumpe mit den einzelnen Schmierstellen in Verbindung steht. Die Fig. 14 und 15 zeigen in diesem Zusammenhang lediglich beispielhaft die mit zylinderförmigen Wälzkörpern 40 ausgerüstete Linearführung, welche über eine oder vorzugsweise mehrere, in der jeweiligen Spitze des Querschnittsprofils der Führung einmündende Schmiermittelleitungen 41, 42 mit einem Anschlusspunkt, hier einer Verschraubung 43 in durchgängiger Verbindung stehen.

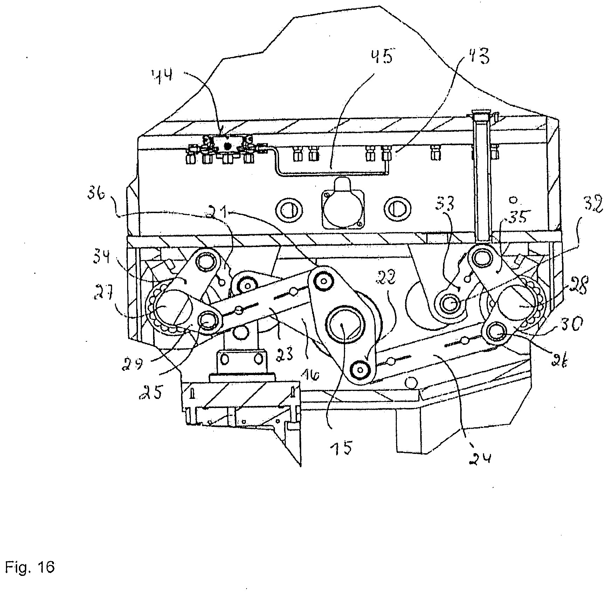

Fig. 16 zeigt einen Schmierölverteiler 44, der mit den einzelnen Verschraubungen 43 über Leitungsabschnitte 45 in Verbindung steht. Vorzugsweise ist jeder Schmierstelle ein Leitungsabschnitt 45 zugeordnet.

Die Schmierung wird unter Mitwirkung einer Maschinensteuerung nach Maßgabe wählbarer Zeitpunkte ausgelöst, wobei für den Fall, dass ein Leitungsabschnitt 41, 42, 45 verstopft sein sollte oder ein Durchfluss aus sonstigen Gründen nicht gegeben ist, ein Störsignal ausgelöst wird, so dass insoweit eine automatische Überwachung der Funktion des Schmiermittelsystems eingerichtet ist.

**Bezugszeichenliste:**

| | | | |
|---|---|---|---|
| 1. | Stationsgehäuse | 28. | Welle |
| 2. | Oberseite | 29. | Zwischenhebel |
| 3. | Gehäuseabschnitt | 30. | Zwischenhebel |
| 4. | Formhalter | 31. | Bolzen |
| 5. | Formhalter | 32. | Bolzen |
| 6. | Pfeile | 33. | Verbindungshebel |
| 7. | Formhälfte | 34. | Verbindungshebel |
| 8. | Formhälfte | 35. | Zwischenhebel |
| 9. | Montageplatte | 36. | Zwischenhebel |
| 10. | Montageplatte | 37. | Ölbad |
| 11. | Motor | 38. | Aufnahmebehältnis |
| 12. | Gewindespindel | 39. | Gehäuseabschnitt |
| 13. | Gewindemuffe | 40. | Wälzkörper |
| 14. | Kniehebelgetriebe | 41. | Schmiermittelleitung |
| 15. | Welle | 42. | Schmiermittelleitung |
| 16. | Hebel | 43. | Verschraubung |
| 17. | Verbindungshebel | 44. | Schmierölverteiler |
| 18. | Stange | 45. | Leitungsabschnitt |
| 19. | Linearführung | | |
| 20. | Führungselement | | |
| 21. | Gelenklager | | |
| 22. | Gelenklager | | |
| 23. | Hebel | | |
| 24. | Hebel | | |
| 25. | Gelenklager | | |
| 26. | Gelenklager | | |
| 27. | Welle | | |

## Patentansprüche

1. Schließmechanismus für die durch zwei Formhalter (4, 5) getragenen wenigstens zwei Formhälften (7, 8) einer Glasformmaschine, insbesondere einer I.S.-Maschine mit einem eine Oberseite (2) aufweisenden Stationsgehäuse (1), sowie einem ein Getriebe und einen Antrieb einbeziehenden Antriebsstrang, wobei die Formhalter (4, 5) mittels des Antriebsstranges zwischen einer Öffnungsstellung der Formhälften (7, 8) und einer Schießstellung horizontal bewegbar angeordnet sind, **dadurch gekennzeichnet, dass** der Antrieb sowie das Getriebe des Antriebsstranges unterhalb der Oberseite (2) innerhalb des Stationsgehäuses (1) angeordnet sind, dass der Antriebsstrang hängend unter dem Gehäuseabschnitt (3) innerhalb des Stationsgehäuses (1) angeordnet ist, dass für die horizontale Bewegung der Formhalter (4, 5) eine in Verbindung mit dem Antriebsstrang eingerichtete Führung innerhalb eines Gehäuseabschnitts (3) oberhalb der Oberseite (2) des Stationsgehäuse (1) sowie seitlich desselben angeordnet ist und dass der Gehäuseabschnitt (3) auf der Oberseite (2) des Stationsgehäuses (1) abgestützt ist.

2. Schließmechanismus nach Anspruch 1, **dadurch gekennzeichnet, dass** die Führung eine Linearführung (19) ist.

3. Schließmechanismus nach einem der Ansprüche 1 oder 2, **dadurch gekennzeichnet, dass** der Antrieb mit Hinblick auf die Darstellung einer ausgangsseitig vertikal gerichteten linearen Bewegung eingerichtet ist.

4. Schließmechanismus nach einem der Ansprüche 1 bis 3, **dadurch gekennzeichnet, dass** der Antrieb durch einen Motor (11), eine Gewindespindel (12), eine Gewindemuffe (13) und eine Stange (18) dargestellt ist.

5. Schließmechanismus nach einem der Ansprüche 1 bis 3, **dadurch gekennzeichnet, dass** der Antrieb durch eine Kolben-Zylinder-Einheit dargestellt ist.

6. Schließmechanismus nach einem der Ansprüche 1 bis 5, **dadurch gekennzeichnet, dass** die Formhalter (4, 5) über Montageplatten (9, 10) und Führungselemente (20) auf der Linearführung (19) gelagert sind.

7. Schließmechanismus nach einem der Ansprüche 1 bis 6, **dadurch gekennzeichnet, dass** das Getriebe zur Umsetzung einer eingangsseitig vertikalen Linearbewegung in zwei horizontale gegenläufige, bezüglich einer vertikalen Mittelebene symmetrische Bewegungen eingerichtet ist.

8. Schließmechanismus nach Anspruch 7, **dadurch gekennzeichnet, dass** das Getriebe ein Kniehebelgetriebe (14) ist.

9. Schließmechanismus nach einem der Ansprüche 1 bis 8, **dadurch gekennzeichnet, dass** unterhalb des Gehäuseabschnitts (3) und innerhalb des Stationsgehäuses (1) ein ein Ölbad (37) aufnehmendes Aufnahmebehältnis (38) eingerichtet ist und dass zumindest das Getriebe innerhalb des Ölbades (37) angeordnet ist.

10. Schließmechanismus nach Anspruch 9, **dadurch gekennzeichnet, dass** das Getriebe innerhalb oder mittels des Aufnahmebehältnisses (38) gelagert ist.

11. Schließmechanismus nach Anspruch 9 oder 10, **dadurch gekennzeichnet, dass** für Schmierstellen außerhalb des Ölbades (37) ein Zentralschmiersystem eingerichtet ist.

12. Schließmechanismus nach Anspruch 11, **dadurch gekennzeichnet, dass** ausgehend von einem Schmierölverteiler (44) jede Schmierstelle mit einer Schmiermittelleitung (41, 42) versehen ist.

13. Schließmechanismus nach einem der Ansprüche 8 bis 12, **dadurch gekennzeichnet, dass** das Kniehebelgetriebe (14) eine zentrale, sich horizontal erstreckende, durch den Antrieb drehend antreibbare Welle (15) aufweist, dass die Welle (15) über zwei untereinander gleich beschaffene, gegenläufig antreibbare Hebel (23, 24) sowie Zwischenhebel (29, 30) jeweils mit einer sich horizontal und parallel zu der Welle (15) erstreckenden Welle (27, 28) in Antriebsverbindung steht und dass die Wellen (27, 28) jeweils über ein ein Kniehebelsystem bildende Zwischenhebel (34, 35) und Verbindungshebel (33, 36) mit den Montageplatten (9, 10) in Antriebsverbindung stehen, diese gegenläufig zwischen der Öffnungsstellung und der Schließstellung der Formhälften (7, 8) bewegend.

14. Schließmechanismus nach Anspruch 13, **dadurch gekennzeichnet, dass** die Wellen (15, 27, 28) innerhalb oder mittels des Aufnahmebehältnisses (38) gelagert sind.

## Claims

1. Closing mechanism for the at least two mould halves (7, 8), supported by two mould holders (4, 5), of a glassware forming machine, in particular an I.S. machine, comprising a station housing (1) having an upper side (2), and comprising a drive train encompassing a gearing and a drive, wherein the mould holders (4, 5) are arranged to be horizontally movable between an opening position of the mould halves (7, 8) and a closing position by means of the drive train, **characterised in that** the drive and the gearing of the drive train are arranged beneath the upper side (2) within the station housing (1), **in that** the drive train is arranged in a suspended manner beneath the housing section (3) within the station housing (1), **in that** for the horizontal movement of the mould holders (4, 5) a guide configured in connection with the drive train is arranged within a housing section (3) above the upper side (2) of the station housing (1) and laterally relative thereto, and **in that** the housing section (3) is supported on the upper side (2) of the station housing (1).

2. Closing mechanism as claimed in claim 1, **characterised in that** the guide is a linear guide (19).

3. Closing mechanism as claimed in any one of claims 1 or 2, **characterised in that** the drive is configured to produce a vertically oriented linear movement on the outlet side.

4. Closing mechanism as claimed in any one of claims 1 to 3, **characterised in that** the drive is a motor (11), a threaded spindle (12), a threaded sleeve (13) and a rod (18).

5. Closing mechanism as claimed in any one of claims 1 to 3, **characterised in that** the drive is a piston-cylinder unit.

6. Closing mechanism as claimed in any one of claims 1 to 5, **characterised in that** the mould holders (4, 5) are mounted on the linear guide (19) via mounting plates (9, 10) and guiding elements (20).

7. Closing mechanism as claimed in any one of claims 1 to 6, **characterised in that** the gearing is configured to convert vertical linear movement on the inlet side into two horizontal opposite movements which are symmetrical relative to a vertical central plane.

8. Closing mechanism as claimed in claim 7, **characterised in that** the gearing is a toggle-lever mechanism (14).

9. Closing mechanism as claimed in any one of claims 1 to 8, **characterised in that** a receptacle (38) which accommodates an oil bath (37) is set up beneath the housing section (3) and within the station housing (1), and **in that** at least the gearing is arranged within the oil bath (37).

10. Closing mechanism as claimed in claim 9, **characterised in that** the gearing is mounted within or by means of the receptacle (38).

11. Closing mechanism as claimed in claim 9 or 10, **characterised in that** a central lubricating system is set up for lubrication points outside of the oil bath (37).

12. Closing mechanism as claimed in claim 11, **characterised in that** each lubrication point is provided with a lubricant line (41, 42) proceeding from a lubricating oil distributor (44).

13. Closing mechanism as claimed in any one of claims 8 to 12, **characterised in that** the toggle-lever mechanism (14) comprises a central, horizontally extending shaft (15) which can be rotatably driven by the drive, **in that** the shaft (15) is drivingly connected via two identical, oppositely drivable levers (23, 24) and intermediate levers (29, 30) each having a shaft (27, 28) which extends horizontally and parallel to the shaft (15), and **in that** the shafts (27, 28) are each drivingly connected to the mounting plates (9, 10) via intermediate levers (34, 35) and connecting levers (33, 36), forming a toggle-lever system, these mounting plates being moved in opposite directions between the opening position and closing position of the mould halves (7, 8).

14. Closing mechanism as claimed in claim 13, **characterised in that** the shafts (15, 27, 28) are mounted within or by means of the receptacle (38).

## Revendications

1. Mécanisme de fermeture pour les au moins deux demi-moules (7, 8) portés par deux supports de moule (4, 5) d'une machine de moulage de verre, en particulier d'une machine I.S. avec un boîtier de poste (1) présentant une face supérieure (2), ainsi qu'une chaîne cinématique intégrant une transmission et un entraînement, dans lequel les supports de moule (4, 5) sont agencés de manière horizontalement mobile au moyen de la chaîne cinématique entre une position d'ouverture des demi-moules (7, 8) et une position de fermeture, **caractérisé en ce que** l'entraînement ainsi que la transmission de la chaîne cinématique sont agencés sous la face supérieure (2) à l'intérieur du boîtier de poste (1), **en ce que** la chaîne cinématique est suspendue sous la section de boîtier (3) à l'intérieur du boîtier de poste (1), **en ce qu'**un guidage aménagé en relation avec la chaîne cinématique est agencé à l'intérieur d'une section de boîtier (3) au-dessus de la face supérieure (2) du boîtier de poste (1) ainsi que sur son côté, pour le déplacement horizontal des supports de moule (4, 5) et **en ce que** la section de boîtier (3) est supportée sur la face supérieure (2) du boîtier de poste (1).

2. Mécanisme de fermeture selon la revendication 1, **caractérisé en ce que** le guidage est un guidage linéaire (19).

3. Mécanisme de fermeture selon l'une quelconque des revendications 1 ou 2, **caractérisé en ce que** l'entraînement est aménagé en vue de la représentation d'un déplacement linéaire dirigé verticalement côté sortie.

4. Mécanisme de fermeture selon l'une quelconque des revendications 1 à 3, **caractérisé en ce que** l'entraînement est représenté par un moteur (11), une broche filetée (12), un manchon fileté (13) et une tige (18).

5. Mécanisme de fermeture selon l'une quelconque des revendications 1 à 3, **caractérisé en ce que** l'entraînement est représenté par une unité piston-cylindre.

6. Mécanisme de fermeture selon l'une quelconque des revendications 1 à 5, **caractérisé en ce que** les supports de moule (4, 5) sont logés par le biais de plaques de montage (9, 10) et d'éléments de guidage (20) sur le guidage linéaire (19).

7. Mécanisme de fermeture selon l'une quelconque des revendications 1 à 6, **caractérisé en ce que** la transmission est aménagée pour la conversion d'un déplacement linéaire vertical côté entrée en deux déplacements horizontaux opposés symétriques par rapport à un plan médian vertical.

8. Mécanisme de fermeture selon la revendication 7, **caractérisé en ce que** la transmission est un mécanisme à genouillère (14).

9. Mécanisme de fermeture selon l'une quelconque des revendications 1 à 8, **caractérisé en ce qu'**un récipient de réception (38) recevant un bain d'huile (37) est aménagé sous la section de boîtier (3) et à l'intérieur du boîtier de poste (1) et **en ce qu'**au moins la transmission est agencée à l'intérieur du bain d'huile (37).

10. Mécanisme de fermeture selon la revendication 9, **caractérisé en ce que** la transmission est logée à l'intérieur ou au moyen du récipient de réception (38).

11. Mécanisme de fermeture selon la revendication 9 ou 10, **caractérisé en ce qu'**un système de lubrification central est aménagé pour les points de lubrification en dehors du bain d'huile (37).

12. Mécanisme de fermeture selon la revendication 11, **caractérisé en ce que** chaque point de lubrification est doté d'une conduite de lubrifiant (41, 42) partant du distributeur d'huile lubrifiante (44).

13. Mécanisme de fermeture selon l'une quelconque des revendications 8 à 12, **caractérisé en ce que** le mécanisme à genouillère (14) présente un arbre (15) central, s'étendant horizontalement, pouvant être entraîné en rotation par l'entraînement, **en ce que** l'arbre (15) est en liaison d'entraînement respectivement avec un arbre (27, 28) s'étendant horizontalement et parallèlement à l'arbre (15) par le biais de deux leviers (23, 24) pouvant être entraînés dans des sens opposés, conçus de manière identique l'un l'autre et des leviers intermédiaires (29, 30) et **en ce que** les arbres (27, 28) sont en liaison d'entraînement avec les plaques de montage (9, 10) respectivement par le biais d'un levier intermédiaire (34, 35) et d'un levier de liaison (33, 36) formant un système à genouillère, les déplaçant dans des sens opposés entre la position d'ouverture et la position de fermeture des demi-moules (7, 8).

14. Mécanisme de fermeture selon la revendication 13, **caractérisé en ce que** les arbres (15, 27, 28) sont logés à l'intérieur ou au moyen du récipient de réception (38).
